# EUROPEAN PATENT APPLICATION

(11) **EP 4 539 196 A1**
(43) Date of publication of application: **16.04.2025**
(21) Application number: 23855206.1
(22) Date of filing: 21.08.2023
(51) Int. Cl.: H01M 10/42, G01N 21/952

(54) **BATTERY EXTERIOR INSPECTION EQUIPMENT**

(30) Priority: 19.08.2022 KR 20220103823
(71) Applicant: LG Energy Solution, Ltd., Seoul 07335 (KR)
(72) Inventor: SHIM, Kyu-Hun, Daejeon 34122 (KR); KIM, Tae-Heon, Daejeon 34122 (KR); LEE, Gil-Young, Daejeon 34122 (KR); LEE, Jun-Oh, Daejeon 34122 (KR)
(74) Representative: Goddar, Heinz J.
(86) International application number: PCT/KR2023/012356
(87) International publication number: WO 2024/039240

(57) **Abstract**

The present disclosure discloses a battery visual inspection system configured to prevent the battery from being damaged or broken during the battery visual inspection process and to facilitate the inspection process. A battery visual inspection system according to one aspect of the present disclosure may include a first inspection unit configured to inspect the side of the battery in an upright state; a second inspection unit configured to inspect the top and bottom of the battery in an upright state; and a first moving unit configured to move the battery along the horizontal direction.

## Description

### TECHNICAL FIELD

The present disclosure relates to an inspection system for inspecting the appearance of a battery. More specifically, it relates to a battery visual inspection system configured to prevent the battery from being damaged or broken during the battery visual inspection process and to facilitate the inspection process.

The present application claims priority to Korean Patent Application No. 10-2022-0103823 filed on August 19, 2022, the disclosures of which are incorporated herein by reference.

### BACKGROUND ART

Secondary batteries having high applicability according to product groups and electrical characteristics such as high energy density are commonly applied not only to portable devices but also to electric vehicles (EVs) and hybrid electric vehicles (HEVs) driven by electric power sources.

Such secondary batteries are attracting attention as a new energy source to improve eco-friendliness and energy efficiency in that they have not only a primary advantage of dramatically reducing the use of fossil fuels but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of this unit battery is about 2.5 V to 4.5 V. Therefore, if a higher output voltage is required, a plurality of batteries may be connected in series to configure a battery pack. **In** addition, depending on the charge/discharge capacity required for the battery pack, a plurality of batteries may be connected in parallel to configure a battery pack. Thus, the number of batteries included in the battery pack and the type of electrical connection may be variously set according to the required output voltage and/or the demanded charge/discharge capacity.

Meanwhile, as types of secondary batteries, cylindrical, prismatic, and pouch-type batteries are known. In the case of a cylindrical battery, an insulating separator is interposed between a positive electrode and a negative electrode and wound to form a jelly roll-shaped electrode assembly, which is inserted into a housing together with an electrolyte to form a battery.

Small cylindrical batteries with the existing form factor of 1865 or 2170 were inspected with the outer circumferential surface of the cylindrical battery facing the floor. In particular, when performing side inspections, the entire side was inspected while rotating or rolling.

For small cylindrical batteries with the form factor of 1865 or 2170, the above visual inspection method is not an issue. However, when inspecting cylindrical secondary batteries, to which a new high-capacity form factor has been applied for their use in electric vehicles, in the same way as before, the cylindrical secondary batteries are unstably seated on the floor and move during the inspection process, thereby making it difficult to proceed with the inspection and causing issues in accuracy. In addition, there was a problem of cylindrical secondary batteries being damaged or broken due to the increase in weight and size.

Therefore, a new type of visual inspection system for cylindrical secondary batteries was needed.

### DISCLOSURE

### Technical Problem

The present disclosure is designed to solve the problems of the related art, and therefore the present disclosure is directed to providing a battery visual inspection system configured to prevent the battery from being damaged or broken during the battery visual inspection process and to facilitate the inspection process.

However, technical problems to be solved by the present disclosure are not limited to the above-described problems, and other problems not mentioned herein may be clearly understood by one of ordinary skill in the art from the following description of the present disclosure.

### Technical Solution

A battery visual inspection system according to an embodiment of the present disclosure may include a first inspection unit configured to inspect the side of the battery in an upright state; a second inspection unit configured to inspect the top and bottom of the battery in an upright state; and a first moving unit configured to move the battery along the horizontal direction.

The battery visual inspection system may include a second moving unit configured to move the battery along the vertical direction.

The first inspection unit may be configured to inspect the side of the battery by dividing it into four areas sequentially arranged along the circumference.

The first inspection unit may include a first lighting portion that irradiates light in a direction toward the side of the battery; a plurality of first reflection portions configured to reflect the light irradiated from the first lighting portion and make it incident on each of the four areas; and a first photographing portion configured to capture images including images of the four areas by incident light reflected back by the plurality of first reflection portions.

The first inspection unit may include a second lighting portion that irradiates light in a direction toward at least one of the top and bottom of the battery.

The first inspection unit may include a path adjustment portion configured to adjust the path of at least a part of the light irradiated from the first lighting portion and incident on the plurality of first reflection portions and at least a part of the light reflected by the side of the battery and reflected back by the plurality of first reflection portions.

The battery visual inspection system may include a rotating unit configured to flip the top and bottom of the battery.

The rotating unit may include a handle cylinder configured to hold the battery; and a rotating cylinder configured to rotate in connection with the handle cylinder.

The second moving unit may be configured to support the bottom surface of the battery that is seated in an upright state on the carrier to raise and lower the battery in the vertical direction.

A battery visual inspection method according to an embodiment of the present disclosure may include a first inspection step of inspecting the side of the battery in an upright state; a first horizontal movement step of moving the battery whose side inspection is completed in the horizontal direction; a second inspection step of inspecting either the top or bottom of the battery in an upright state; a second horizontal movement step of moving the battery whose top inspection is completed in the horizontal direction; a rotating step of flipping the top and bottom of the battery; and a third inspection step of inspecting any portion of the top and bottom of the battery in an upright state, which was not inspected in the second inspection step.

### Advantageous Effects

According to one aspect of the present disclosure, the visual inspection is performed while the battery is seated in an upright state compared to the conventional battery visual inspection system, so that the battery may be prevented from being damaged or broken during the inspection process due to the increase in weight and size of the battery. In addition, since the inspection is performed while the battery is moved in an upright state, the battery is less likely to move compared to when it is moved in a state of lying on its side, whereby the inspection process may be easy and accurate.

According to another aspect of the present disclosure, the entire side of the battery may be divided into four areas and inspected through images including images of each area. In particular, the battery may be inspected without rotation during the inspection process. Therefore, the quality of inspection may be improved and the inspection process may be facilitated.

According to still another aspect of the present disclosure, the space efficiency of the battery visual inspection system may be increased by placing both the side inspection unit of the battery and the top and bottom inspection unit of the battery on one side of the battery.

According to still another aspect of the present disclosure, when inspecting the top and bottom of the battery, there is no need to separately position inspection units at the top and bottom of the battery, but only need to position the inspection device at either the top or bottom. Therefore, the space efficiency is increased, and the process efficiency of the battery visual inspection is improved.

### DESCRIPTION OF DRAWINGS

FIG. 1 is a view showing a battery visual inspection system according to the present disclosure.
FIGS. 2 and 3 are views showing the operation method of a second moving unit included in the battery visual inspection system according to the present disclosure.
FIG. 4 is a view showing a first inspection unit included in the battery visual inspection system according to the present disclosure.
FIG. 5 is a partial cross-sectional view of the first inspection unit included in the battery visual inspection system according to the present disclosure.
FIG. 6 is a view showing a battery inspected by the battery visual inspection system according to the present disclosure.
FIGS. 7 to 12 are views showing an inspection light path in the first inspection unit included in the battery visual inspection system according to the present disclosure.
FIG. 13 is a view showing a second inspection unit included in the battery visual inspection system according to the present disclosure.
FIG. 14 is a partial cross-sectional view of the second inspection unit included in the battery visual inspection system according to the present disclosure.
FIG. 15 is a view showing an inspection light path in the second inspection unit included in the battery visual inspection system according to the present disclosure.
FIGS. 16 to 19 are views showing the operation method of a rotating unit included in the battery visual inspection system according to the present disclosure.

### BEST MODE

Hereinafter, preferred embodiments of the present disclosure will be described in detail with reference to the accompanying drawings. Since the accompanying drawings in this specification illustrate preferred embodiments of the present disclosure, and together with the detailed description of the present disclosure described later, serve to further understand the technical aspects of the present disclosure, the present disclosure should not be construed as limited to what is shown in such drawings. The same reference numerals refer to the same components. Also, in the drawings, the thickness, ratio, and dimensions of the components may be exaggerated for effective description of the technical content.

The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms indicating directions as used herein such as upper, lower, left, right, front, and rear are used for convenience of description only, and it is obvious to those skilled in the art that the terms may vary depending on the position of a reference object or an observer.

Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

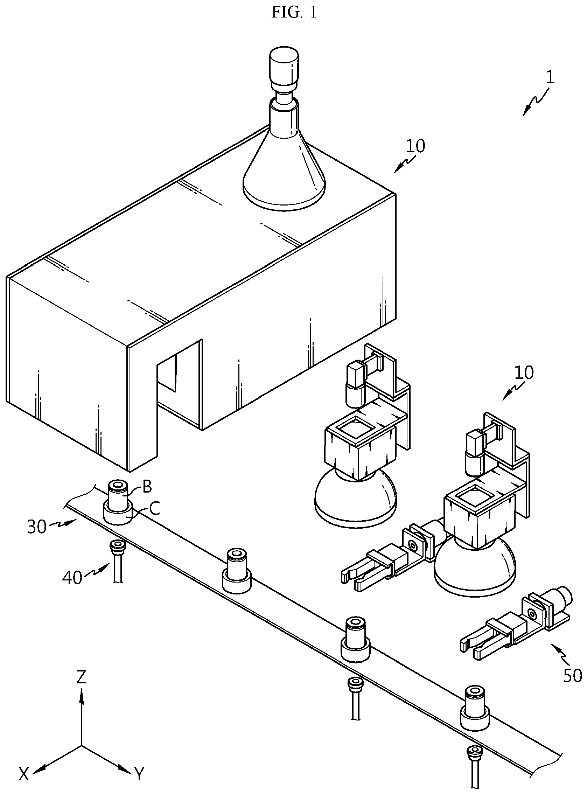

FIG. 1 is a view showing a battery visual inspection system 1 according to the present disclosure.

Referring to FIG. 1, the battery visual inspection system 1 according to the present disclosure may include a first inspection unit 10, a second inspection unit 20, and a first moving unit 30.

The first inspection unit 10 may be configured to inspect the side of the battery B in an upright state. The first inspection unit 10 may be configured to inspect the side of the battery B, which is upright so that the bottom of an approximate cylinder is located in the negative Z-axis direction.

The first inspection unit 10 may perform a visual inspection by checking for the presence or absence of dents, foreign substances, scratches, and the like on the appearance of the side of the battery B.

The second inspection unit 20 may be configured to inspect the top and bottom of the battery B in an upright state. The second inspection unit 20 may be configured to inspect the top and bottom of the battery B, which is upright so that the bottom surface of an approximate cylinder is located in the negative Z-axis direction. The second inspection unit 20 may be located at the top of the battery B to inspect the top of the battery B. The second inspection unit 20 may be located at the bottom of the battery B to inspect the bottom of the battery B. For example, as shown in FIG. 1, the second inspection unit 20 may include a device located at the top of the battery B to inspect the top of the battery B and a device located at the top of the battery B to inspect the bottom of the battery B whose top and bottom are flipped by a rotating unit 50 to be described later. However, the second inspection unit 20 may be composed of only one device to inspect the top and bottom of the battery B.

The second inspection unit 20 may perform a quality inspection of the terminal portion on the top of the battery B and a quality inspection of the gasket by inspecting the appearance of the top of the battery B. The second inspection unit 20 may perform a visual inspection by checking for the presence or absence of dents, foreign substances, scratches, and the like on the appearance of the top of the battery B. The second inspection unit 20 may perform a quality inspection of the crimping portion on the bottom of the battery B and a quality inspection of the gasket by inspecting the appearance of the bottom of the battery B. The second inspection unit 20 may perform a visual inspection by checking for the presence or absence of dents, foreign substances, scratches, and the like on the appearance of the bottom of the battery B.

The first inspection unit 10 and the second inspection unit 20 may be disposed along the horizontal direction. For example, the arrangement position of the first inspection unit 10 and the second inspection unit 20 may be such that the first inspection unit 10 and the second inspection unit 20 are disposed in order along the positive Y-axis direction as shown in FIG. 1. However, the arrangement position of the first inspection unit 10 and the second inspection unit 20 is not limited as shown in FIG. 1, and the second inspection unit 20 and the first inspection unit 10 may be disposed in order along the positive Y-axis direction.

The first moving unit 30 may be configured to move the battery B along the horizontal direction. The first moving unit 30 may be configured to move the battery B along the Y-axis extension direction. The first moving unit 30 may be a conveyor configured to move the approximately cylindrical battery B in an upright and seated state. The first moving unit 30 may be a conveyor configured to move the carrier C configured to allow the battery B to be seated in an upright state. The first moving unit 30 may be configured to be perforated with portions thereof corresponding to the inspection positions of the first inspection unit 10 and the second inspection unit 20 so that the second moving unit 40 to be described later supports the bottom of the battery B.

According to this configuration of the present disclosure, the visual inspection is performed while the battery B is seated in an upright state compared to the conventional battery visual inspection system, so that the battery B may be prevented from being damaged or broken during the inspection process due to the increase in weight and size of the battery B. In addition, since the inspection is performed while the battery B is moved in an upright state, the battery B is less likely to move compared to when it is moved in a state of lying on its side, whereby the inspection process may be easy and accurate.

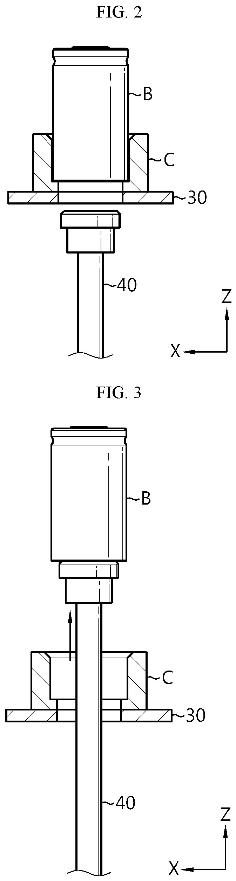

FIGS. 2 and 3 are views showing the operation method of a second moving unit 40 included in the battery visual inspection system 1 according to the present disclosure.

Referring to FIGS. 2 and 3, the battery visual inspection system 1 according to the present disclosure may include a second moving unit 40.

The second moving unit 40 may be configured to move the battery B along the vertical direction. The second moving unit 40 may be configured to move the battery B along the Z-axis extension direction. The second moving unit 40 may be configured to move in the positive Z-axis direction and the negative Z-axis direction. The second moving unit 40 may be a hydraulic device configured to move the approximately cylindrical battery B in an upright and seated state. The second moving unit 40 may be configured to move the battery B moved along the horizontal direction by the first moving unit 30 to the inspection positions of the first inspection unit 10 and the second inspection unit 20 along the vertical direction. The second moving unit 40 may be configured to support the bottom of the battery B to move the battery B. The second moving unit 40 may be configured to create a vacuum in the space formed between the portion supporting the bottom of the battery B and the bottom of the battery B to bring them into close contact.

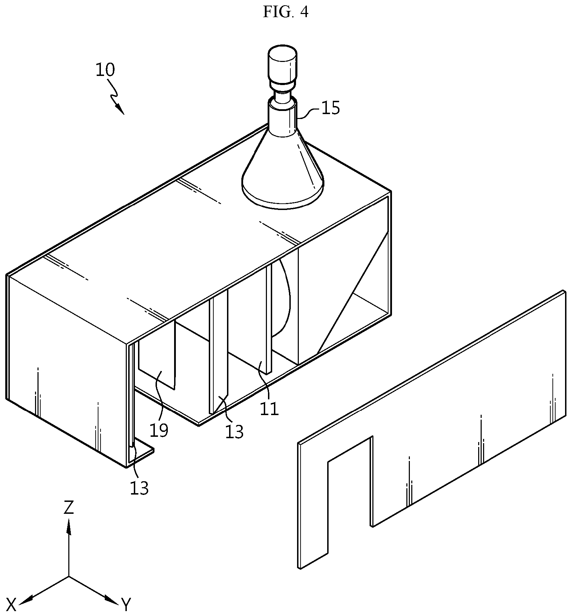

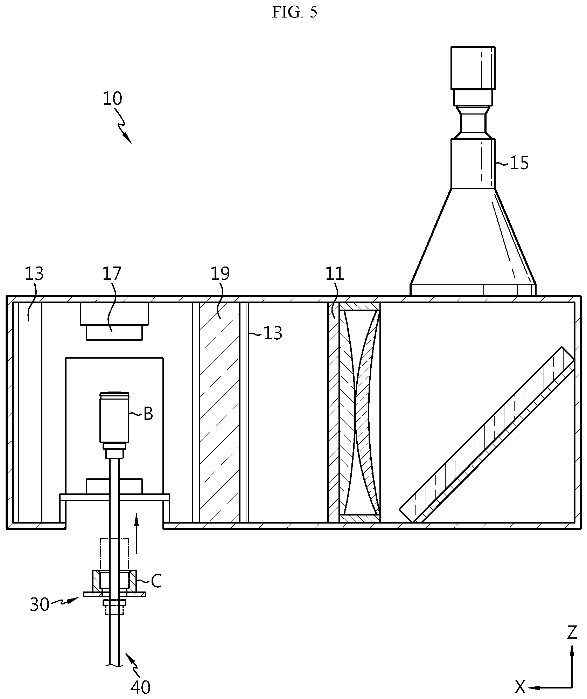

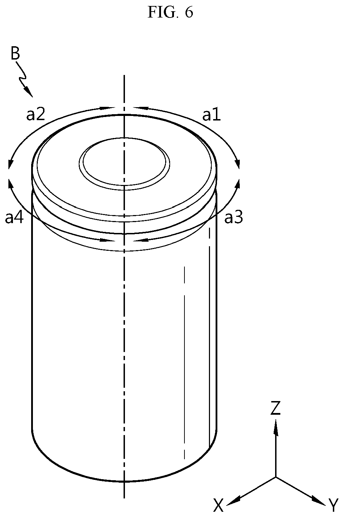

FIG. 4 is a view showing a first inspection unit 10 included in the battery visual inspection system 1 according to the present disclosure. FIG. 5 is a partial cross-sectional view of the first inspection unit 10 included in the battery visual inspection system 1 according to the present disclosure. FIG. 6 is a view showing a battery B inspected by the battery visual inspection system 1 according to the present disclosure.

Referring to FIGS. 4 to 6, the first inspection unit 10 may include a first lighting portion 11, a first reflection portion 13, a first photographing portion 15, a path adjustment portion 19, and a second lighting portion 17.

The first inspection unit 10 may be configured to inspect the side of the battery B by dividing it into four areas a1, a2, a3, a4 sequentially arranged along the circumference. The four areas a1, a2, a3, a4 of the side of the battery B may be sides corresponding to an arc in which the circumference is roughly divided into quarters. The four areas a1, a2, a3, a4 are intended to roughly distinguish the sides of the battery B, and each area does not necessarily correspond to an arc with an exact central angle of 90 degrees. Each of the four areas a1, a2, a3, a4 may be a side corresponding to an arc with a central angle of approximately 100 degrees. Therefore, there may be some overlap with the adjacent area at the end of each area.

The first lighting portion 11 may irradiate light in a direction toward the side of the battery B. The first lighting portion 11 may be coaxial lighting. The first lighting portion 11 may be disposed between the first photographing portion 15 to be described later and the battery B. The first lighting portion 11 may be disposed in the positive X-axis direction of the battery B in an upright state and configured to irradiate light toward the side of the battery B in the negative X-axis direction.

The first reflection portion 13 may be configured to reflect the light irradiated from the first lighting portion 11 and make it incident on each of the four areas a1, a2, a3, a4. The first reflection portion 13 may be in plurality. There may be four first reflection portions 13. The first reflection portion 13 may be a mirror. However, the arrangement form or number of the first reflection portions 13 may be changed depending on the design of the first inspection unit 10.

The first photographing portion 15 may be configured to capture images including images of four areas by incident light reflected back by the plurality of first reflection portions 13. The first photographing portion 15 may include a lens and a camera.

The second lighting portion 17 may irradiate light in a direction toward at least one of the top and bottom of the battery B. The second lighting portion 17 may be a surface lighting. The second lighting portion 17 may be a ring-shaped lighting. The second lighting portion 17 may supplement the light required for visual inspection of the battery B when the light irradiated by the first lighting portion 11 is less than the amount of light required for visual inspection of the battery B, such as when the image captured by the first photographing portion 15 is excessively dark. The second lighting portion 17 may be disposed in at least one of the top and bottom of the battery B. That is, the second lighting portion 17 may be optionally provided when the visibility of the appearance of the battery B is not secured only with the amount of light irradiated by the first lighting portion 11.

The path adjustment portion 19 may be configured to adjust the path of at least a part of the light irradiated from the first lighting portion 11 and incident on the plurality of first reflection portions 13 and at least a part of the light reflected by the side of the battery B and reflected back by the plurality of first reflection portions 13. The path adjustment portion 19 may be a prism. The path adjustment portion 19 may be a mirror.

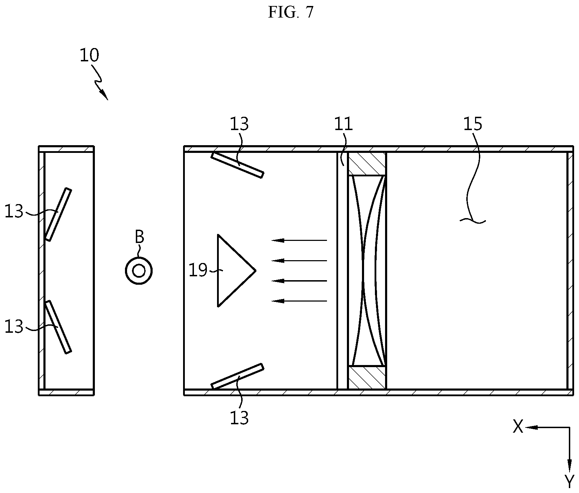

Hereinafter, the principle of inspecting the side of the battery B by the first inspection unit 10 will be described in more detail with reference to FIGS. 7 to 12.

FIGS. 7 to 12 are views showing an inspection light path in the first inspection unit 10 included in the battery visual inspection system 1 according to the present disclosure.

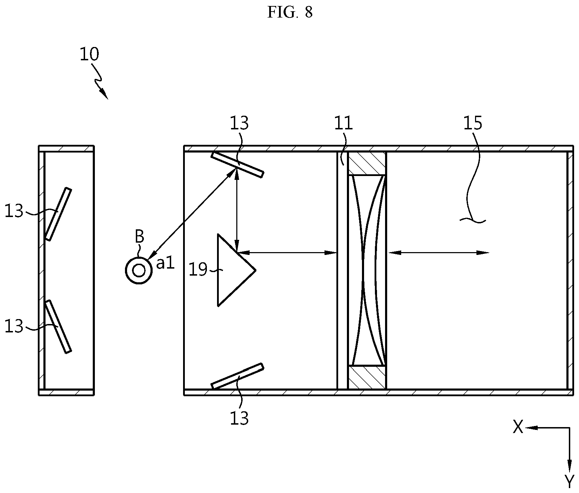

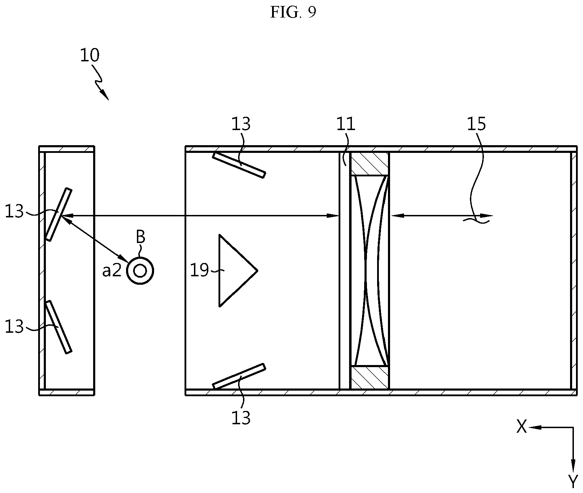

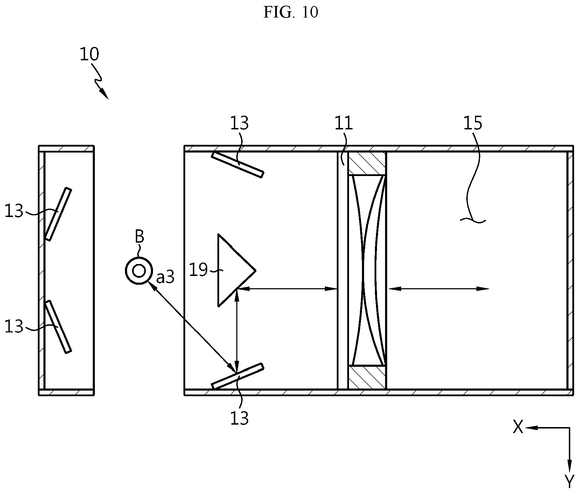

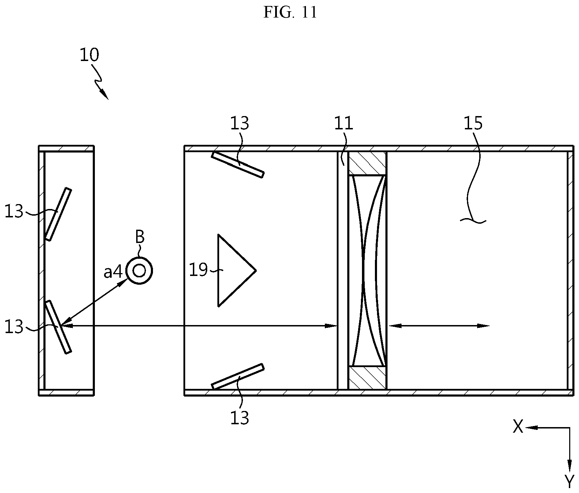

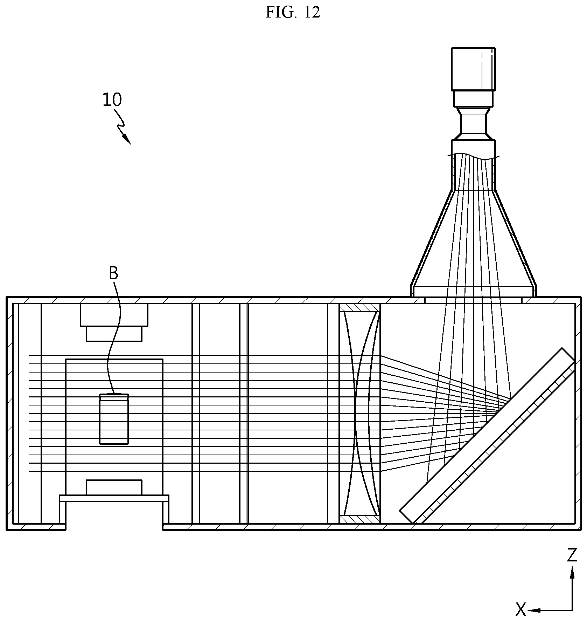

FIG. 7 is a view showing a light path where the first lighting portion 11 irradiates light toward the battery B. FIG. 8 is a view showing an inspection light path for inspecting area a1 of the four areas a1, a2, a3, a4 on the side of the battery B. FIG. 9 is a view showing an inspection light path for inspecting area a2 of the four areas a1, a2, a3, a4 on the side of the battery B. FIG. 10 is a view showing an inspection light path for inspecting area a3 of the four areas a1, a2, a3, a4 on the side of the battery B. FIG. 11 is a view showing an inspection light path for inspecting area a4 of the four areas a1, a2, a3, a4 on the side of the battery B. FIG. 12 is a view showing an overall inspection light path of the first inspection unit 10 when viewed from the side.

Referring to FIG. 7, the first lighting portion 11 may be located on the same axis as the battery B along the X-axis extension direction. The first lighting portion 11 may be located in the negative X-axis direction of the battery B to irradiate light in the positive X-axis direction toward the side of the battery B.

Referring to FIG. 8, a part of the light irradiated by the first lighting portion 11 may be irradiated to a1 of the four areas a1, a2, a3, a4 on the side of the battery B by the path adjustment portion 19 and the first reflection portion 13. The light irradiated to a1 of the four areas a1, a2, a3, a4 on the side of the battery B may be reflected and incident on the first photographing portion 15 by the first reflection portion 13 and the path adjustment portion 19 again.

Referring to FIG. 9, a part of the light irradiated by the first lighting portion 11 may be irradiated to a2 of the four areas a1, a2, a3, a4 on the side of the battery B by the first reflection portion 13. The light irradiated to a2 of the four areas a1, a2, a3, a4 on the side of the battery B may be reflected and incident on the first photographing portion 15 by the first reflection portion 13 again.

Referring to FIG. 10, a part of the light irradiated by the first lighting portion 11 may be irradiated to a3 of the four areas a1, a2, a3, a4 on the side of the battery B by the path adjustment portion 19 and the first reflection portion 13. The light irradiated to a3 of the four areas on the side of the battery B may be reflected and incident on the first photographing portion 15 by the first reflection portion 13 and the path adjustment portion 19 again.

Referring to FIG. 11, a part of the light irradiated by the first lighting portion 11 may be irradiated to a4 of the four areas a1, a2, a3, a4 on the side of the battery B by the first reflection portion 13. The light irradiated to a4 of the four areas a1, a2, a3, a4 on the side of the battery B may be reflected and incident on the first photographing portion 15 by the first reflection portion 13 again.

Referring to FIG. 12, according to the light path for each inspection area described above, the first photographing portion 15 may capture images including images of four areas a1, a2, a3, a4 as the light incident on the first photographing portion 15 is refracted by the lens, reflected back by the lens mirror, and incident on the camera. The image of each area is an image of the side corresponding to an arc with a central angle of approximately 100 degrees, and the images of the overlapping portions may be overlapped. Therefore, the accuracy of the side visual inspection of the battery B may be improved.

According to this structure of the present disclosure, the entire side of the battery B may be divided into four areas a1, a2, a3, a4 and inspected through images including images of each area. In particular, the battery B may be inspected without rotation during the inspection process. Therefore, the quality of inspection may be improved and the inspection process may be facilitated.

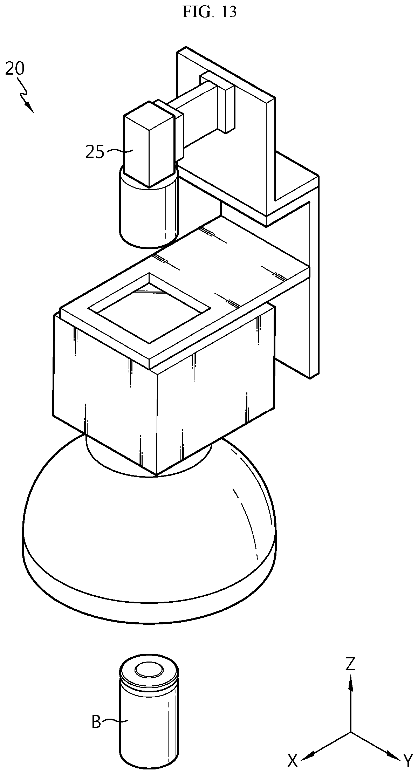

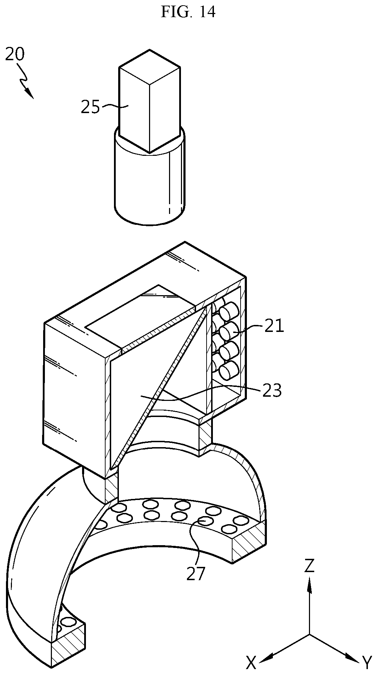

FIG. 13 is a view showing a second inspection unit 20 included in the battery visual inspection system 1 according to the present disclosure. FIG. 14 is a partial cross-sectional view of the second inspection unit 20 included in the battery visual inspection system 1 according to the present disclosure.

Referring to FIGS. 13 and 14, the second inspection unit 20 may include a third lighting portion 21, a second reflection portion 23, a second photographing portion 25, and a fourth lighting portion 27.

The third lighting portion 21 may radiate light in a direction toward the top of the battery B. The third lighting portion 21 may be coaxial lighting. The third lighting portion 21 may be disposed between the second photographing portion 25 to be described later and the battery B. The third lighting 21 may be disposed on top of the battery B in an upright state and configured to irradiate light downward toward the top of the battery B.

The second reflection portion 23 may be configured to reflect the light irradiated from the third lighting portion 21 and make it incident on the top of the battery B. The second reflection portion 23 may be a mirror. However, the arrangement form or number of the second reflection portion 23 may be changed depending on the design of the second inspection unit 20.

The second photographing portion 25 may be configured to capture images including images of the top of the battery B by incident light reflected back by the second reflection portion 23. The second photographing portion 25 may include a lens and a camera.

The fourth lighting portion 27 may irradiate light in a direction toward at least one of the top and bottom of the battery B. The fourth lighting portion 27 may be a low angle lighting. The fourth lighting portion 27 may be a dome-shaped lighting. The fourth lighting portion 27 may supplement the light required for visual inspection of the battery B when the light irradiated by the third lighting portion 21 is less than the amount of light required for visual inspection of the battery B, such as when the image captured by the second photographing portion 25 is excessively dark. The fourth lighting portion 27 may be disposed in at least one of the top and bottom of the battery B. That is, the fourth lighting portion 27 may be optionally provided when the visibility of the appearance of the battery B is not secured only with the amount of light irradiated by the third lighting portion 21.

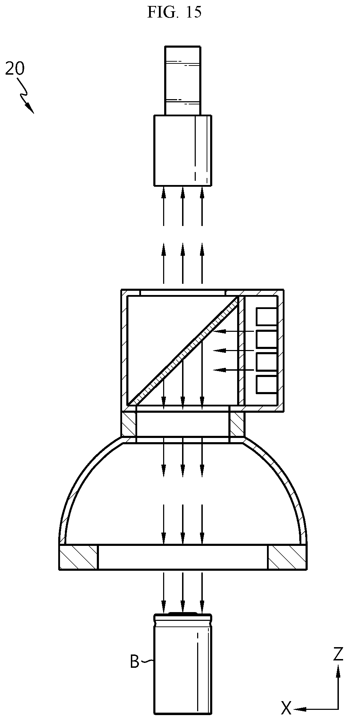

FIG. 15 is a view showing an inspection light path in the second inspection unit 20 included in the battery visual inspection system 1 according to the present disclosure.

Referring to FIG. 15, the third lighting portion 21 may be located on the top of the battery B. The light irradiated by the third lighting portion 21 may be irradiated to the top of the battery B by the second reflection portion 23. The light irradiated to the top of the battery B may be reflected back and incident on the second photographing portion 25.

According to this structure of the present disclosure, the space efficiency of the battery visual inspection system 1 may be increased by placing both the first inspection unit 10 and the second inspection unit 20 on one side of the battery B.

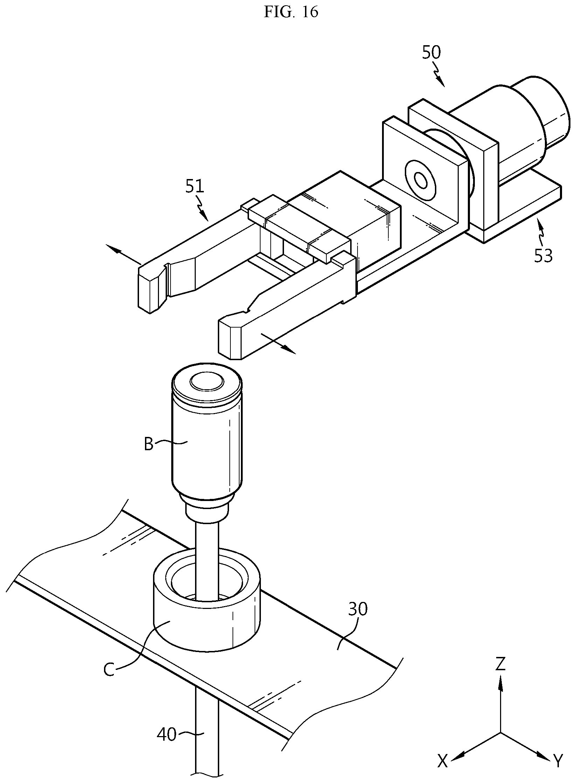

FIGS. 16 to 19 are views showing the operation method of a rotating unit 50 included in the battery visual inspection system 1 according to the present disclosure.

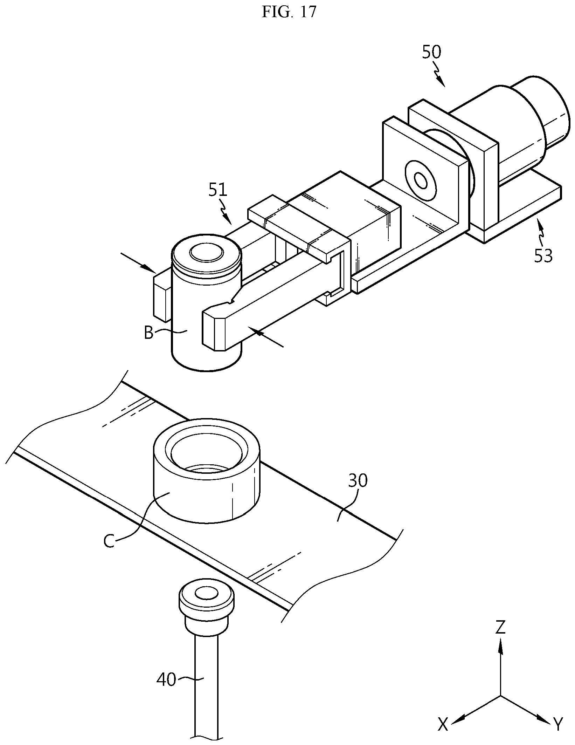

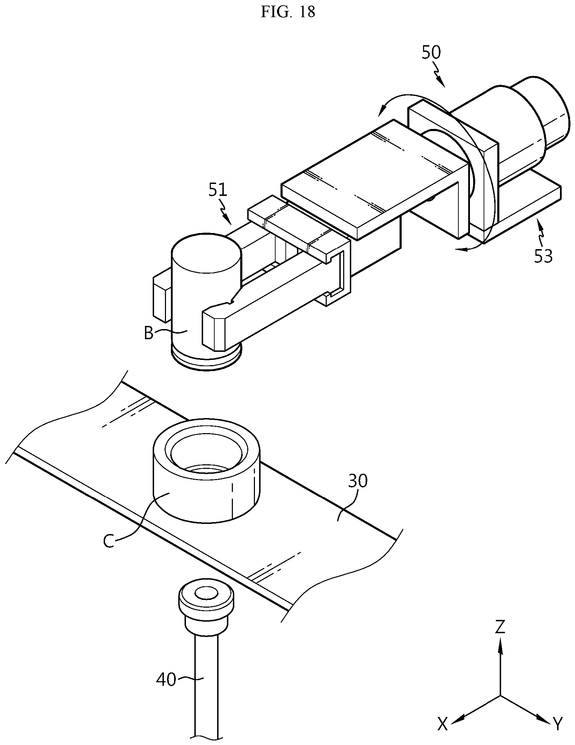

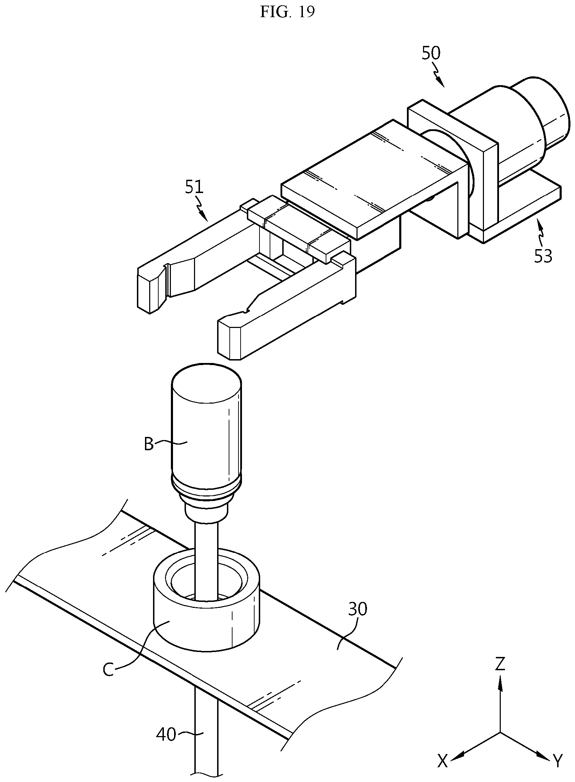

FIG. 16 is a view showing that the handle cylinder 51 of the rotating unit 50 is widened to hold the battery B. FIG. 17 is a view showing that the handle cylinder 51 of the rotating unit 50 is narrowed to hold the battery B. FIG. 18 is a view showing that the rotating cylinder 53 of the rotating unit 50 is rotated to flip the top and bottom of the battery B. FIG. 19 is a view showing that the battery B, whose top and bottom are reversed by the rotating cylinder 53 of the rotating unit 50, is moved by the second moving unit 40.

Referring to FIGS. 16 to 19, the rotating unit 50 may include a handle cylinder 51 and a rotating cylinder 53.

The rotating unit 50 may be configured to flip the top and bottom of the battery B.

The handle cylinder 51 may be configured to hold the battery B. The handle cylinder 51 may be configured to hold the battery B on both sides of the battery B. The handle cylinder 51 may be a hydraulic device configured to hold the battery B. The portion of the handle cylinder 51 holding the battery B may be configured to have a shape that roughly corresponds to the outer circumferential surface of the battery B. The handle cylinder 51 may include a rubber material in a portion holding the battery B to increase the coupling force or friction force with the battery B. The handle cylinder 51 may include a buffer member to prevent excessive pressure from being applied to the portion holding the battery B.

The rotating cylinder 53 may be configured to rotate. The rotating cylinder 53 may be connected to the handle cylinder 51. The rotating cylinder 53 may be configured to rotate clockwise or counterclockwise. The rotating cylinder 53 may be connected to the handle cylinder 51 holding the battery B and configured to rotate the handle cylinder 51. The rotating cylinder 53 may be rotatable at intervals of 180 degrees. The rotating cylinder 53 may be a hydraulic device configured to rotate.

Referring to FIGS. 16 to 19 again, the method for visual inspection of the top and bottom of the battery B will be described in more detail.

The battery visual inspection method according to the present disclosure may include a first inspection step of inspecting the side of the battery B in an upright state; a first horizontal movement step of moving the battery B whose side inspection is completed in the horizontal direction; a second inspection step of inspecting either the top or bottom of the battery B in an upright state; a second horizontal movement step of moving the battery B whose top inspection is completed in the horizontal direction; a rotating step of flipping the top and bottom of the battery B; and a third inspection step of inspecting any portion of the top and bottom of the battery B in an upright state, which was not inspected in the second inspection step.

The first inspection step may inspect the side of the battery B in an upright state. In the first horizontal movement step, the battery B whose first inspection step is completed may be moved to a position corresponding to the top inspection of the second inspection unit 20 along the positive Y-axis direction by the first moving unit 30. The battery B may be moved to the top inspection position of the second inspection unit 20 along the positive Z-axis direction by the second moving unit 40. In the second inspection step, the second inspection unit 20 may inspect the appearance of the top of the battery B. The battery B whose second inspection step is completed may be moved along the negative Z-axis direction to the first moving unit 30 by the second moving unit 40 so as to be seated on the first moving unit 30. In the second horizontal movement step, the battery B may be moved to a position corresponding to the bottom inspection of the second inspection unit 20 along the positive Y-axis direction by the first moving unit 30. The battery B may be moved along the positive Z-axis direction by the second moving unit 40 to a position corresponding to the rotating unit 50. The rotating step may include a step in which the battery B is restrained by the handle cylinder 51 of the rotating unit 50, a step in which the battery B is disconnected from the second moving unit 40, and a step in which the top and bottom of the battery B are flipped over by the rotating cylinder 53 of the rotating unit 50. The battery B may be moved to the bottom inspection position of the second inspection unit 20 along the positive Z-axis direction by the second moving unit 40. In the third inspection step, the second inspection unit 20 may inspect the appearance of the bottom of the battery B. The battery B whose bottom inspection is completed may be moved along the negative Z-axis direction to the first moving unit 30 by the second moving unit 40 so as to be seated on the first moving unit 30. The battery B whose overall visual inspection is completed may be discharged along the positive Y-axis direction by the first moving unit 30.

However, the inspection order and method by the battery visual inspection system 1 of the present disclosure are not limited to the above. For example, the top and bottom inspections of the battery B may be performed before the side inspection of the battery B, or the bottom inspection of the battery B may be performed before the top inspection of the battery B. In addition, rotation of the battery B by the rotating unit 50 may be performed immediately after the top inspection is completed.

According to this structure of the present disclosure, when inspecting the top and bottom of the battery B, there is no need to separately position inspection units at the top and bottom of the battery B, but only need to position the inspection device at either the top or bottom. Therefore, the space efficiency is increased, and the process efficiency of the battery B visual inspection is improved.

As described above, the present disclosure has been described mainly with preferred embodiments with reference to the accompanying drawings, but it is apparent to those skilled in the art that many and various obvious modifications are possible from this description without departing from the scope of the present disclosure. Therefore, the scope of the present disclosure should be construed by the claims which are written to include examples of such many modifications.

### [Explanation of reference signs]

1 battery visual inspection system
B battery
C carrier
10 first inspection unit
11 first lighting portion
13 first reflection portion
15 first photographing portion
17 second lighting portion
19 path adjustment portion
20 second inspection unit
21 third lighting portion
23 second reflection portion
25 second photographing portion
27 fourth lighting portion
30 first moving unit
40 second moving unit
50 rotating unit
51 handle cylinder
53 rotating cylinder

## Claims

1. A battery visual inspection system comprising:
a first inspection unit configured to inspect the side of the battery in an upright state; a second inspection unit configured to inspect the top and bottom of the battery in an upright state; and a first moving unit configured to move the battery along the horizontal direction.

2. The battery visual inspection system according to claim 1,
which comprises a second moving unit configured to move the battery along the vertical direction.

3. The battery visual inspection system according to claim 1,
wherein the first inspection unit is configured to inspect the side of the battery by dividing it into four areas sequentially arranged along the circumference.

4. The battery visual inspection system according to claim 1,
wherein the first inspection unit comprises: a first lighting portion that irradiates light in a direction toward the side of the battery; a plurality of first reflection portions configured to reflect the light irradiated from the first lighting portion and make it incident on each of the four areas; and a first photographing portion configured to capture images comprising images of the four areas by incident light reflected back by the plurality of first reflection portions.

5. The battery visual inspection system according to claim 1,
wherein the first inspection unit comprises a second lighting portion that irradiates light in a direction toward at least one of the top and bottom of the battery.

6. The battery visual inspection system according to claim 4,
wherein the first inspection unit comprises a path adjustment portion configured to adjust the path of at least a part of the light irradiated from the first lighting portion and incident on the plurality of first reflection portions and at least a part of the light reflected by the side of the battery and reflected back by the plurality of first reflection portions.

7. The battery visual inspection system according to claim 1,
which comprises a rotating unit configured to flip the top and bottom of the battery.

8. The battery visual inspection system according to claim 7,
wherein the rotating unit comprises: a handle cylinder configured to hold the battery; and a rotating cylinder configured to rotate in connection with the handle cylinder.

9. The battery visual inspection system according to claim 2,
wherein the second moving unit is configured to support the bottom surface of the battery that is seated in an upright state on the carrier to raise and lower the battery in the vertical direction.

10. A battery visual inspection method comprising:
a first inspection step of inspecting the side of the battery in an upright state;
a first horizontal movement step of moving the battery whose side inspection is completed in the horizontal direction;
a second inspection step of inspecting either the top or bottom of the battery in an upright state;
a second horizontal movement step of moving the battery whose top inspection is completed in the horizontal direction;
a rotating step of flipping the top and bottom of the battery; and
a third inspection step of inspecting any portion of the top and bottom of the battery in an upright state, which was not inspected in the second inspection step.
